# EUROPEAN PATENT APPLICATION

(11) **EP 2 339 835 A2**
(43) Date of publication of application: **29.06.2011**
(21) Application number: 10192355.5
(22) Date of filing: 24.11.2010
(51) Int. Cl.: H04N 5/445

(54) **Information processing apparatus, information processing method, program, control target device, and information processing system**

(30) Priority: 28.12.2009 JP 2009298147
(71) Applicant: Sony Corporation, Tokyo 108-0075 (JP)
(72) Inventor: Ohashi, Yoshinori, Minato-ku Tokyo 108-0075 (JP)
(74) Representative: Turner, James Arthur

(57) **Abstract**

There is provided a remote commander including an acquisition section which acquires layout information having one or a plurality of pieces of object information from a control target device via a communication section, the object information being formed by associating command identification information for identifying a command with respect to the control target device, object identification information for identifying an object, and coordinate information indicating a position of the object on a screen with each other, and a display control section which causes the object to be displayed at the position on the screen indicated by the coordinate information, the object being identified by the object identification information with respect to each of the pieces of object information that the layout information acquired by the acquisition section has.

## Description

The present invention relates to an information processing apparatus, an information processing method, a program, a control target device, and an information processing system.

In recent years, control target devices including display devices such as TVs and recording devices such as video recorders have been in widespread use mainly in households. In order to cause such a control target device to execute desired processing, a user can use an information processing apparatus which controls the control target device by transmitting a command using a radio signal to the control target device and causing the control target device to execute the command, for example. The information processing apparatus is referred to as remote control or remote commander, and, as the types thereof, there are exemplified an RF (Radio Frequency) remote control and an infrared remote control.

Meanwhile, since the kinds of the control target devices become diverse, it is assumed that one information processing apparatus, which transmits a command to a control target device, is provided for each of the control target devices. However, when an information processing apparatus is provided for each of the control target devices, the number of the information processing apparatuses which the user has to manage increases each time a new control target device is installed, and hence, the management of the information processing apparatuses by the user becomes complicated. Consequently, there have been carried out many attempts for controlling multiple control target devices by one information processing apparatus (for example, refer to JP-A-10-322782). The information processing apparatus having a function of controlling multiple control target devices is also referred to as universal remote control, and, by using the universal remote control, the user can reduce the effort of managing the information processing apparatuses.

However, in the technology described above, by operating one information processing apparatus, the user could only transmit command identification information previously registered in the one information processing apparatus to multiple control target devices. That is, there was an issue that it was necessary to previously register, in one information processing apparatus, command identification information which could be executed by a newly installed control target device.

Further, there was also an issue that it was necessary to previously register, in one information processing apparatus, a screen layout on the information processing apparatus which the user viewed for selecting command identification information. Therefore, there was an issue that it was difficult for the information processing apparatus to manage the command identification information to be selected by the user and the screen layout viewed by the user for selecting the command identification information with respect to each control target device.

In light of the foregoing, it is desirable to provide a novel and improved technology capable of managing the command identification information to be selected by the user and the screen layout viewed by the user for selecting the command identification information with respect to each control target device.

Various respective aspects and features of the invention are defined in the appended claims. Combinations of features from the dependent claims may be combined with features of the independent claims as appropriate and not merely as explicitly set out in the claims.

According to an embodiment of the present invention, there is provided an information processing apparatus which includes an input section which accepts input of operation information from a user, a communication section which communicates with a control target device via a radio signal, a display section which displays a screen, an acquisition section which acquires layout information having one or a plurality of pieces of object information from the control target device via the communication section, the object information being formed by associating command identification information for identifying a command with respect to the control target device, object identification information for identifying an object, and coordinate information indicating a position of the object on the screen with each other, a display control section which causes the object to be displayed at the position on the screen indicated by the coordinate information, the object being identified by the object identification information with respect to each of the pieces of object information that the layout information acquired by the acquisition section has, and a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section.

When there are a plurality of pieces of the layout information, the acquisition section may acquire the pieces of layout information specific to screens, respectively, from the control target device via the communication section. The display control section may select one piece of layout information from among the pieces of layout information specific to the screens, respectively, based on the operation information, the input of which is accepted by the input section, and may cause the object to be displayed at the position on the screen indicated by the coordinate information, the object being identified by the object identification information with respect to each of the pieces of object information that the selected layout information has.

When there are a plurality of the control target devices, the acquisition section may acquire the pieces of layout information specific to the control target devices, respectively, from the control target devices via the communication section. The display control section may select one piece of layout information from among the pieces of layout information specific to the control target devices, respectively, based on the operation information, the input of which is accepted by the input section, and may cause the object to be displayed at the position on the screen indicated by the coordinate information, the object being identified by the object identification information with respect to each of the pieces of object information that the selected layout information has.

The acquisition section may further acquire a communication mode, which is further associated with the command identification information, from the control target device via the communication section. The notification section may notify, via the communication section, the control target device of the command identification information by the communication mode which is associated with the object identification information for identifying the selected object and which is acquired by the acquisition section.

According to another embodiment of the present invention, there is provided an information processing apparatus which includes an input section which accepts input of operation information from a user, a communication section which communicates with a control target device via a radio signal, a transmission/reception section which communicates with a server, a display section which displays a screen, an acquisition section which acquires model information for identifying layout information which has one or a plurality of object information, the object information being formed by associating command identification information for identifying a command with respect to the control target device, object identification information for identifying an object, and coordinate information indicating a position of the object on the screen with each other, and which transmits the acquired model information to the server via the transmission/reception section and acquires the layout information identified by the model information from the server via the transmission/reception section, a display control section which causes the object to be displayed at the position on the screen indicated by the coordinate information, the object being identified by the object identification information with respect to each of the pieces of object information that the layout information acquired by the acquisition section has, and a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section.

The acquisition section may acquire the model information from the control target device via the communication section.

The acquisition section may acquire the model information from the operation information, the input of which is accepted by the input section.

According to the embodiments of the present invention described above, it is possible to manage the command identification information to be selected by the user and the screen layout viewed by the user for selecting the command identification information with respect to each control target device.

Embodiments of the invention will now be described with reference to the accompanying drawings, throughout which like parts are referred to by like references, and in which:
FIG. 1 is a diagram showing a configuration of an information processing system according to a first embodiment of the present invention;
FIG. 2 is a diagram showing an example of a remote control screen displayed by a remote commander according to the embodiment;
FIG. 3 is a diagram showing a functional configuration of the remote commander according to the embodiment;
FIG. 4 is a diagram showing a functional configuration of a control target device according to the embodiment;
FIG 5 is a diagram showing an example of a remote control code list transmitted from the control target device according to the embodiment;
FIG. 6 is a diagram showing another example of a remote control code list transmitted from the control target device according to the embodiment;
FIG 7 is a diagram showing an example of a remote control layout list specific to each page transmitted from the control target device according to the embodiment;
FIG. 8 is an object display example when objects are arranged based on a remote control layout specific to each page;
FIG 9 is a flowchart showing a flow of processing executed by the information processing system according to the embodiment;
FIG. 10 is a diagram showing a configuration of an information processing system according to a second embodiment of the present invention;
FIG. 11 is a diagram showing a functional configuration of a remote commander according to the embodiment;
FIG. 12 is a diagram showing a functional configuration of a server according to the embodiment; and
FIG 13 is a flowchart showing a flow of processing executed by the information processing system according to the embodiment.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted. In the case of distinguishing structural elements of one embodiment from structural elements of another embodiment, the structural elements are denoted with different reference numerals (for example, XA, XB, ...), and in the case of not distinguishing structural elements of one embodiment from structural elements of another embodiment, the structural elements are denoted with the same reference numerals (for example, X).

Note that the description will be given in the following order.

### 1. First embodiment

1-1. Configuration of information processing system
1-2. Example of remote control screen
1-3. Functional configuration of remote commander
1-4. Functional configuration of control target device
1-5. Example of remote control code list
1-6. Another example of remote control code list
17. Example of remote control layout list specific to each page
1-8. Object display example
1-9. Processing executed by information processing system

### 2. Second embodiment

2-1. Configuration of information processing system
2-2. Functional configuration of remote commander
2-3. Functional configuration of server
2-4. Processing executed by information processing system

### 3. Modified example

### 4. Summary

### <1. First embodiment>

First, a first embodiment of the present invention will be described. In the first embodiment of the present invention, an information processing apparatus acquires remote control information from a control target device.

### [1-1. Configuration of information processing system]

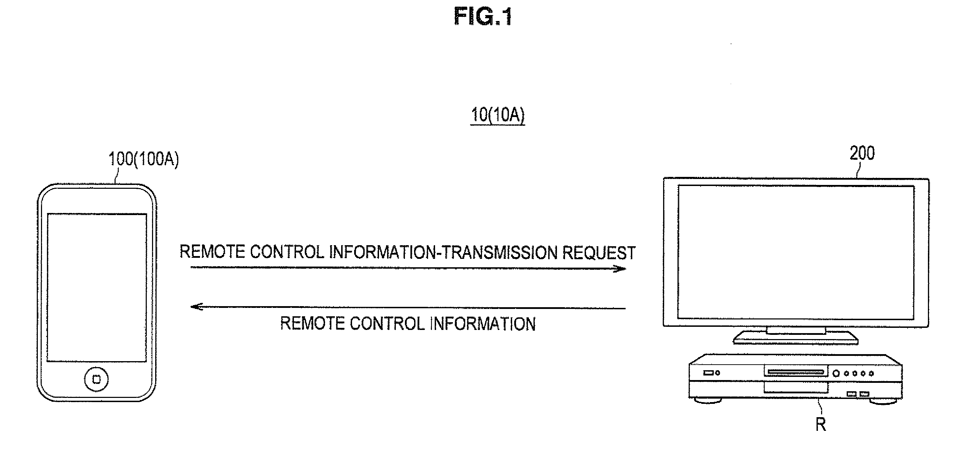

FIG 1 is a diagram showing a configuration of an information processing system according to the first embodiment of the present invention. With reference to FIG. 1, the configuration of the information processing system according to the embodiment will be described.

As shown in FIG. 1, an information processing system 10A according to the first embodiment of the present invention includes a remote commander 100A as an example of the information processing apparatus, and a control target device 200. When operation information for selecting the control target device 200 is input to the remote commander 100A from a user, the remote commander 100A transmits a remote control information-transmission request to the control target device 200. In the remote control information there are included command identification information for identifying a command which can be received by the control target device 200 and a screen layout viewed by a user for selecting the command identification information. When receiving the remote control information-transmission request from the remote commander 100A, the control target device 200 sends back, as the response thereto, remote control information to the remote commander 100A.

The remote commander 100A generates and displays a screen for allowing the user to select command identification information in accordance with the screen layout received from the control target device 200. When the user inputs operation information to the remote commander 100A while viewing the screen, the remote commander 100A generates a command based on the operation information, the input of which is accepted, and transmits the command to the control target device 200. For generating the command, the screen layout and the command identification information which are received from the control target device 200 are used. The control target device 200 receives the command from the remote commander 100A, and executes the processing corresponding to the received command. The remote commander 100A and the control target device 200 can communicate with each other via a radio signal, for example.

The hardware configuration of the remote commander 100A is not particularly limited, and the remote commander 100A may be, for example, mobile information terminals such as a PC (Personal Computer), a mobile phone, and a PDA (Personal Digital Assistant), game machines, or various home information appliances. In the present embodiment, there will be described the case where the remote commander 100A is a mobile information terminal which includes a touch panel input device and a display device having a relatively small display area.

The hardware configuration of the control target device 200 is also not particularly limited, and may be any as long as the control target device 200 has a function of executing processing in accordance with the command transmitted by the remote commander 100A. In the present embodiment, although the case where the control target device 200 is a display device such as a TV will be described, the control target device 200 may also be a recording device R, for example.

In the present embodiment, there will be described in detail a technique for the remote commander 100A to manage command identification information to be selected by a user and a screen layout viewed by the user for selecting the command identification information with respect to each control target device 240.

### [1-2. Example of remote control screen]

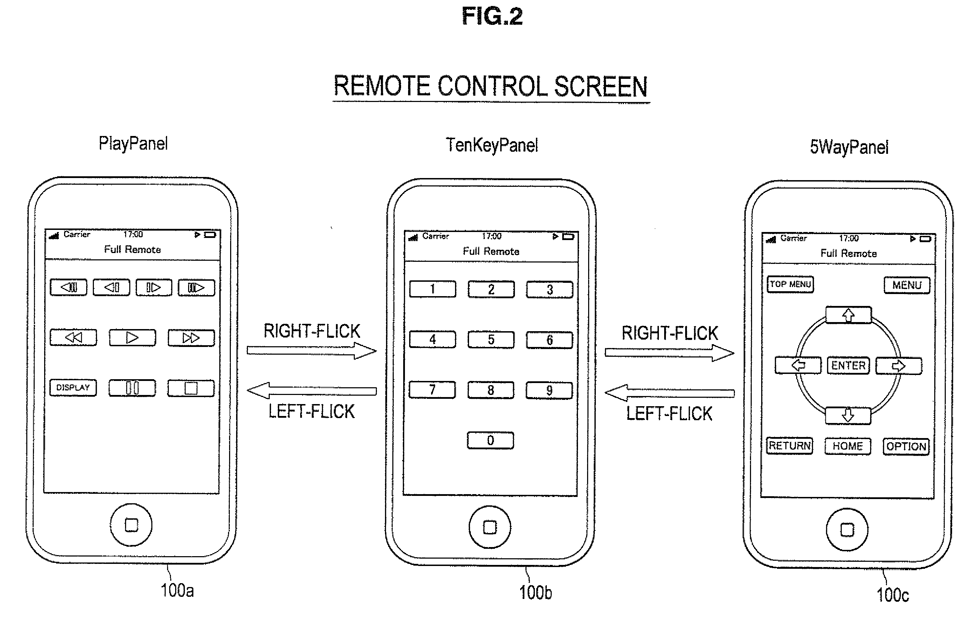

FIG 2 is a diagram showing an example of a remote control screen displayed by a remote commander according to the first embodiment of the present invention. With reference to FIG 2, the example of the remote control screen displayed by the remote commander according to the embodiment will be described.

As shown in FIG. 2, the remote commander 100A according to the present embodiment can acquire a screen layout from a control target device 200, and can manage a screen layout with respect to each control target device 200. Further, there is assumed a case where it is difficult to arrange buttons for user operation in one screen. In this case, as shown in FIG. 2, the screens displayed in remote commanders 100a to 100c (PlayPanel, TenKeyPanel, 5WayPanel), respectively, may be switched from one to another based on operation information input by the user. For example, respective screens (respective pages) may be switched by flick operation on the touch panel.

For example, the PlayPanel shown in FIG. 2 is displayed for content reproduction such as play, pause, and fast-forward. Further, the TenKeyPanel is displayed with number buttons from "0" to "9" being arranged thereon. The 5WayPanel is displayed for performing up/down/left/right operation, determination operation, cancel operation, and the like.

In FIG. 2, there is shown the example in which, every time right-flick operation is performed, the screen switches in the order of the PlayPanel, the TenKeyPanel, and then the 5WayPanel, and every time left-flick operation is performed, the screen is switched in the inverse order to that in the case of the right-flick operation (in the order of the 5WayPanel, the TenKeyPanel, and then the PlayPanel). Here, the screen which is displayed first among the remote control screens is preferably the screen which is viewed relatively often by the user for operating the control target device 200. It is preferred that a screen which needs larger number of times of switching operations to be displayed be a screen the frequency of which being viewed by the user for operating the control target device 200 is low.

In FIG. 2, the screen which is displayed first among the remote control screens is the PlayPanel, and the screen switches in the order of the TenKeyPanel and the 5WayPanel by the right-flick operation. In this case, the PlayPanel is preferably the screen which is viewed relatively often by the user for operating the control target device 200. It is preferred that, as the screen switches to the TenKeyPanel and then to the 5WayPanel, the TenKeyPanel and the 5WayPanel be screens the frequencies of which being viewed by the user for operating the control target device 200 are getting lower in the stated order. The control target device 200 may transmit the thus designed screen layout to the remote commander 100A.

### [1-3. Functional configuration of remote commander]

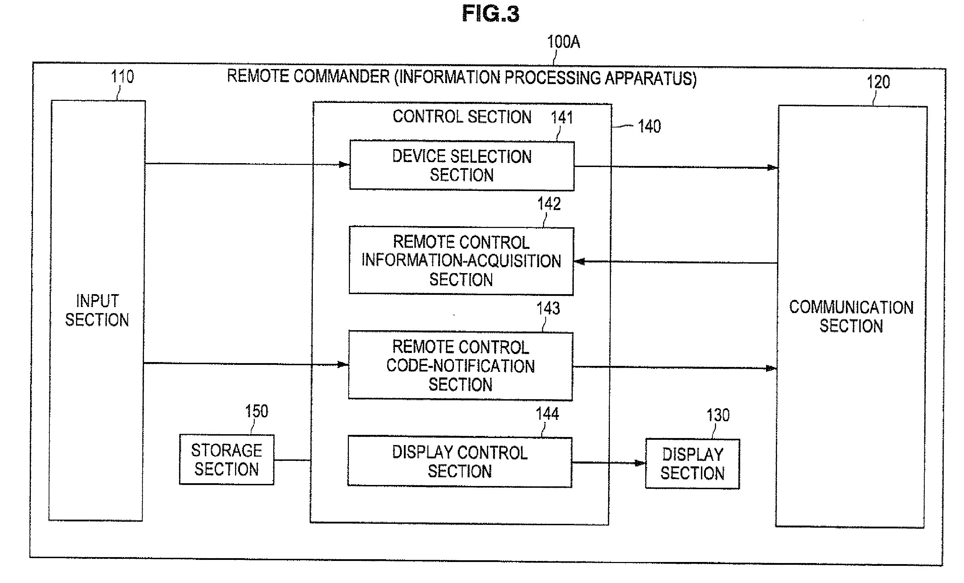

FIG. 3 is a diagram showing a functional configuration of the remote commander according to the first embodiment of the present invention. With reference to FIG. 3, the functional configuration of the remote commander according to the embodiment will be described.

As shown in FIG. 3, the remote commander 100A includes an input section 110, a communication section 120, a display section 130, a control section 140, and a storage section 150.

The input section 110 has a function of accepting input of operation information from a user. The input section 110 includes an input device, for example. As the input section 110, there can be used a touch panel, a keyboard, a mouse, and a button, for example. However, in the present embodiment, there will be particularly described the case where a touch panel is used as the input section 110.

The communication section 120 has a function of communicating with the control target device 200 via a radio signal. The communication section 120 includes a communication device, for example. As a communication mode used for the communication with the control target device 200 via a radio signal, there can be used a communication mode using infrared rays, a communication mode using radio waves, a communication mode via the Internet, and the like. That is, the communication mode used for the communication with the control target device 200 via a radio signal is not particularly limited.

The display section 130 has a function of displaying information output from the control section 140. The display section 130 includes a display device, for example. As the display section 130, there can be used a CRT (Cathode Ray Tube), an LCD (Liquid Crystal Display), a PDP (Plasma Display Panel), and an ELD (Electro-Luminescence Display), for example.

The control section 140 has a function of controlling operation of the remote commander 100A. The control section 140 includes, for example, a CPU (Central Processing Unit) and a RAM (Random Access Memory). The function of the control section 140 is realized by developing a program stored in the storage section 150 in the RAM by the CPU, and executing the program developed in the RAM by the CPU. The control section 140 includes a device selection section 141, a remote control information-acquisition section 142, a remote control code-notification section 143, and a display control section 144.

The device selection section 141 has a function of acquiring device selection information via the input section 110 from the user. When acquiring the device selection information via the input section 110 from the user, the device selection section 141 transmits a remote control information-transmission request to the control target device 200 via the communication section 120 using a radio signal. Note that the device selection information is information which is input in the case of detecting a control target device 200 from which the user wants to acquire remote control information.

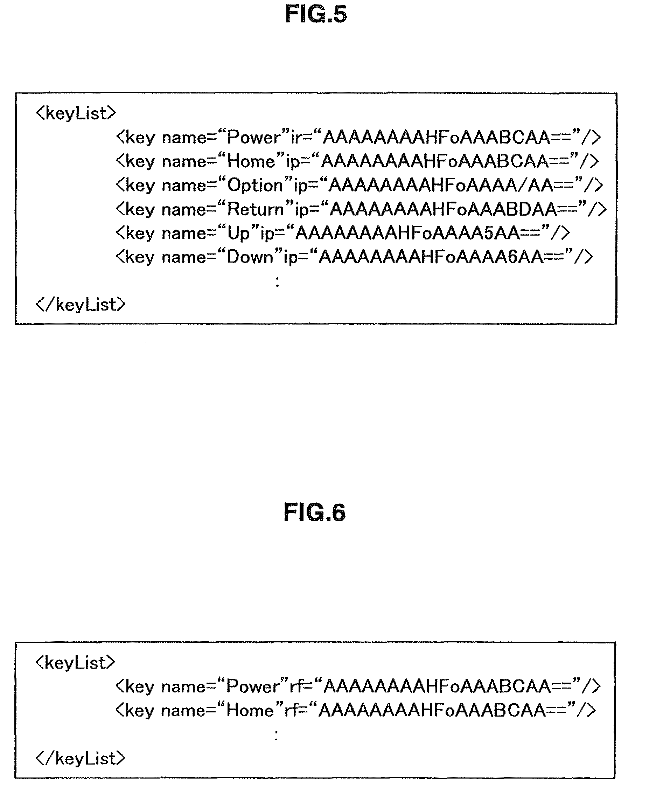

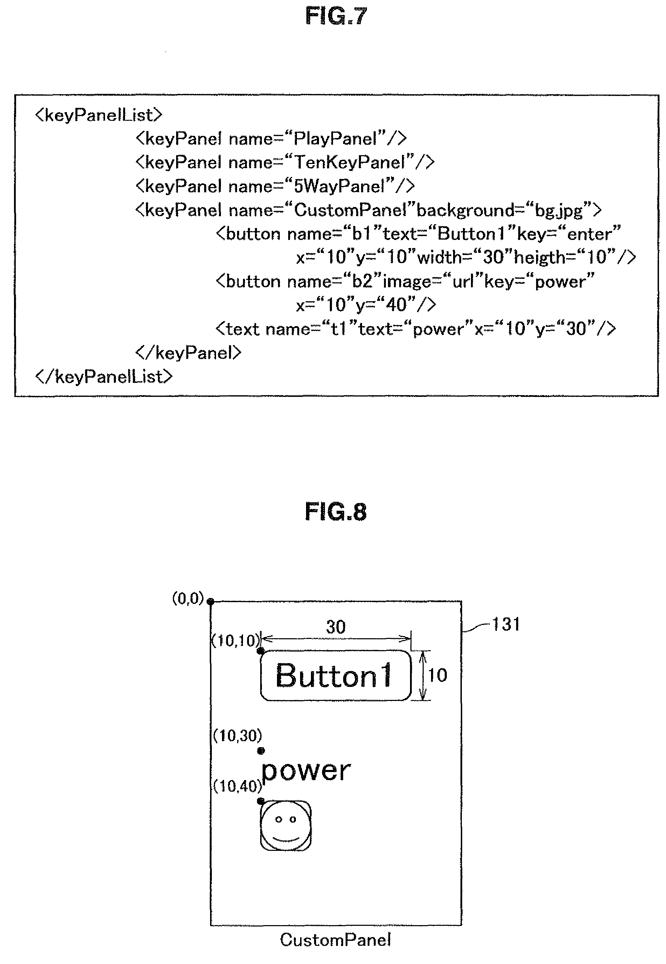

The remote control information-acquisition section 142 has a function of acquiring layout information (screen layout) having one or multiple pieces of object information from the control target device 200 via the communication section 120. Here, the object information is formed by associating the following with each other: command identification information for identifying a command with respect to the control target device 200; object identification information for identifying an object; and coordinate information indicating a position of the object on a screen. The remote control information-acquisition section 142 functions as an example of an acquisition section. A remote control code, which will be described later with reference to FIG. 5 and FIG. 6, is an example of the command identification information. The object information will be described later with reference to FIG. 7.

Also, the remote control information-acquisition section 142 may acquire pieces of layout information specific to screens, respectively, from the control target device 200 via the communication section 120. In this way, the display control section 144 can cause different screens to be displayed by using the pieces of layout information specific to the screens, respectively, as shown in FIG. 2. Further, the remote control information-acquisition section 142 may also acquire, from the respective multiple control target devices 200, pieces of layout information specific to the control target devices 200, respectively, via the communication section 120. In this way, the display control section 144 can cause different screens to be displayed depending on respective control target devices 200, by using the pieces of layout information specific to the control target devices 200, respectively.

The remote control information-acquisition section 142 may further acquire a communication mode, which is further associated with the command identification information, from the control target device 200 via the communication section 120. In this way, the remote control code-notification section 143 can adopt different communication modes depending on respective commands and can transmit the commands to the control target devices 200. As the communication mode, there can be used, as described above, a communication mode using infrared rays, a communication mode using radio waves, a communication mode via the Internet, and the like. The communication mode will be described later with reference to FIG. 5 and FIG. 6.

The display control section 144 has a function of causing an object to be displayed at the position on the screen indicated by the coordinate information, the object being identified by the object identification information with respect to each of the pieces of object information that the layout information acquired by the remote control information-acquisition section 142 has. The object displayed herein may be acquired from the control target device 200 or may be stored in the storage section 150. A display example of the object will be described later with reference to FIG. 8.

The display control section 144 may select one piece of layout information from among the pieces of layout information specific to the screens, respectively, based on the operation information, the input of which is accepted by the input section 110, and may cause the obj ect to be displayed at the position on the screen indicated by the coordinate information, the object being identified by the object identification information with respect to each of the pieces of object information that the selected layout information has. With reference to FIG. 2, the display control section 144 selects, for example, layout information of the TenKeyPanel. In that case, the display control section 144 causes the object to be displayed at the position on the screen indicated by the coordinate information, the object being identified by the object identification information with respect to each of the pieces of object information that the layout information of the TenKeyPanel has. The display result is as the TenKeyPanel shown in FIG. 2.

The display control section 144 may select one piece of layout information from among the pieces of layout information specific to the control target devices 200, respectively, based on the operation information, the input of which is accepted by the input section 110, and may cause the object to be displayed at the position on the screen indicated by the coordinate information, the object being identified by the object identification information with respect to each of the pieces of object information that the selected layout information has.

The remote control code-notification section 143 has a function of selecting any one of one or multiple objects based on the operation information, the input of which is accepted by the input section 110. Further, the remote control code-notification section 143 has a function of notifying, via the communication section 120, the control target device 200 of the command identification information which is associated with the object identification information for identifying the selected object and which is acquired by the remote control information-acquisition section 142.

For example, the remote control code-notification section 143 selects any one of the objects in the remote control screen shown in FIG. 2 based on the operation information, the input of which is accepted by the input section 110. In the case where the input section 110 includes a touch panel, for example, the remote control code-notification section 143 detects the position on the touch panel at which the user touched, and selects the object displayed at the position corresponding thereto on the display section 130.

The remote control code-notification section 143 may also notify, via the communication section 120, the control target device 200 of the command identification information by the communication mode which is associated with the object identification information for identifying the selected object and which is acquired by the remote control information-acquisition section 142.

The storage section 150 has a function of storing data and programs used by the control section 140. The storage section 150 includes an HDD (Hard Disk Drive) and a semiconductor memory, for example.

According to the configuration described above, it becomes possible to manage the command identification information to be selected by the user and the screen layout viewed by the user for selecting the command identification information with respect to each control target device 200.

### [1-4. Functional configuration of control target device]

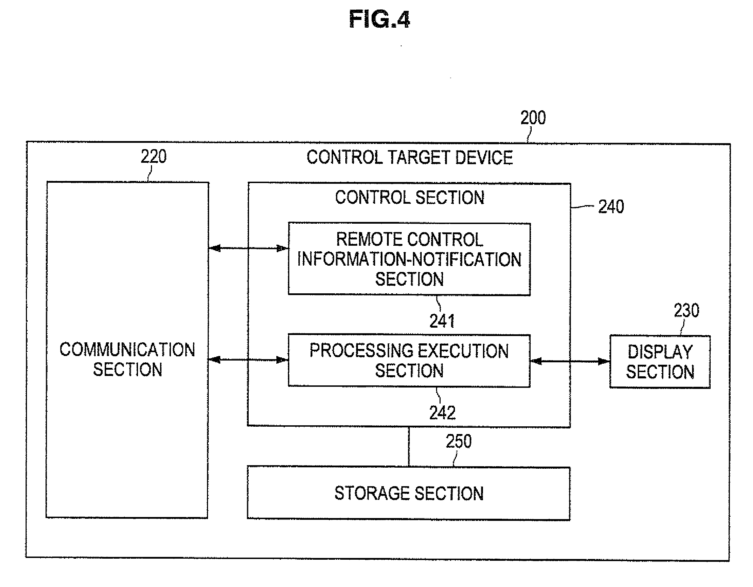

FIG. 4 is a diagram showing a functional configuration of a control target device according to the first embodiment of the present invention. With reference to FIG. 4, the functional configuration of the control target device according to the embodiment will be described.

As shown in FIG. 4, the control target device 200 includes a communication section 220, a display section 230, a control section 240, and a storage section 250.

The communication section 220 has a function of communicating with the remote commander 100A via a radio signal. The communication section 220 includes a communication device, for example. A communication mode used for the communication with the remote commander 100A via a radio signal is not particularly limited as described above.

The display section 230 has a function of displaying information output from the control section 240. The display section 230 includes a display device, for example. As the display section 230, there can be used a CRT, an LCD, a PDP, and an ELD, for example.

The control section 240 has a function of controlling operation of the control target device 200. The control section 240 includes, for example, a CPU and a RAM. The function of the control section 240 is realized by developing a program stored in the storage section 250 in the RAM by the CPU, and executing the program developed in the RAM by the CPU. The control section 240 includes a remote control information-notification section 241 and a processing execution section 242.

The remote control information-notification section 241 has a function of notifying, via the communication section 220, the remote commander 100A of the layout information stored in the storage section 250. When receiving a remote control information-transmission request from the remote commander 100A, for example, the remote control information-notification section 241 notifies the remote commander 100A of the layout information, as an example of the remote control information, as a response. The remote control information-notification section 241 corresponds to an example of a communication section.

The processing execution section 242 has functions of acquiring the command identification information from the remote commander 100A via the communication section 220 and executing the command identified by the acquired command identification information. As described above, there are assumed various pieces of processing as the processing executed by the control target device 200, and hence, the processing to be executed by the control target device 200 is not particularly limited.

For example, in the case where the control target device 200 is a display device, the processing to be executed by the control target device 200 may be processing of transferring a focus from one object to another, processing of reproducing and displaying the content determined by a determination command transmitted from the remote commander 100A, or the like. Further, for example, in the case where the control target device 200 is a recording device, the processing to be executed by the control target device 200 may be processing of recording content determined by a determination command transmitted from the remote commander 100A, processing of making a recording reservation of the content, or the like. For example, in the case where the control target device 200 is an audio output device, the processing to be executed by the control target device 200 may be processing of changing the volume of audio output.

The storage section 250 has a function of storing data and programs used by the control section 240. The storage section 250 includes an HDD and a semiconductor memory, for example. In addition thereto, the storage section 250 has a function of storing layout information. The layout information, as described above, is information having one or multiple pieces of object information, the object information being formed by associating the following with each other: command identification information for identifying a command with respect to the control target device 200; object identification information for identifying an object; and coordinate information indicating a position of the object on the display section 130 of the remote commander 100A.

### [1-5. Example of remote control code list]

FIG. 5 is a diagram showing an example of a remote control code list transmitted from the control target device according to the first embodiment of the present invention. With reference to FIG. 5, an example of the remote control code list transmitted from the control target device according to the embodiment will be described.

In FIG. 5, there is expressed, by using an XML (Extensible Markup Language), a remote control code list to be transmitted from the control target device 200 to the remote commander 100A. Here, one or multiple key tags are included between keyList tags, and in a key tag, a name attribute and an ir attribute or an ip attribute are included. The name attribute is a character string which represents a virtual code of a command, and is used for a remote control layout list specific to each page. The actual remote control code is provided as a character string within the ir attribute or the ip attribute.

The ir attribute and the ip attribute each represent a communication mode described above, and for example, a command having the ir attribute indicates that the command corresponds to a command transmitted by a communication mode using infrared rays. A command having the ip attribute indicates that the command corresponds to a command transmitted by a communication mode via the Internet.

### [1-6. Another example of remote control code list]

FIG. 6 is a diagram showing another example of a remote control code list transmitted from the control target device according to the first embodiment of the present invention. With reference to FIG. 6, another example of a remote control code list transmitted from the control target device according to the embodiment will be described.

In FIG. 6, there is expressed, by using an XML, a remote control code list to be transmitted from the control target device 200 to the remote commander 100A.. Here, one or multiple key tags are included between keyList tags, and in a key tag, a name attribute and an rf attribute are included. The name attribute is a character string which represents a virtual code of a command, and is used for a remote control layout list specific to each page. The actual remote control code is provided as a character string within the rf attribute.

The rf attribute represents a communication mode described above, and for example, a command having the rf attribute indicates that the command corresponds to a command transmitted by a communication mode using radio waves. Examples of the attribute which represents the communication mode includes, but are not limited to, the ir attribute and the ip attribute shown in FIG 5, and the rf attribute shown in FIG. 6.

### [1-7. Example of remote control layout list specific to each page]

FIG 7 is a diagram showing an example of a remote control layout list specific to each page transmitted from the control target device according to the first embodiment of the present invention. With reference to FIG. 7, an example of a remote control layout list specific to each page transmitted from the control target device according to the embodiment will be described.

In FIG. 7, there is expressed, by using an XML, a remote control layout list specific to each page transmitted from the control target device 200 to the remote commander 100A. Here, one or multiple keyPanel tags are included between keyPanelList tags, and in a keyPanel tag, a name attribute is included. The name attribute represents a pattern of a remote control layout. The PlayPanel, the TenKeyPanel, and the 5WayPanel correspond to screens shown in FIG. 2, respectively. Those are layout patterns which are previously determined, and hence, in the case where the control target device 200 defines its own layout, the control target device 200 can define the layout of the remote control screen by using a button tag, a text tag, and the like. Note that the previously determined layout information is stored in the storage section 150 of the remote commander 100A, and the layout information can be used therefor, for example. The button tag, the text tag, and the like correspond to the pieces of object information described above.

CustomPanel is an example of a layout uniquely defined by the control target device 200. The name attribute represented by the button tag or the text tag represents a virtual code of an object, and the object can be handled by using the virtual code. The text tag and the image tag represent object identification information for identifying the object. When the user presses a button represented by the button tag, a remote control code which has a key attribute ("enter", "power", or the like) in the button tag as a virtual code is transmitted to the control target device 200. The virtual code and the remote control code are associated with each other by the remote control code list shown in FIG 5 and FIG 6. For example, the remote commander 100A can display the keyPanel, and, among the pieces of keyPanel written in the remote control layout list specific to each page shown in FIG 7, the number of switching operations for displaying keyPanel increases as going down the list.

### [1-8. Object display example]

FIG 8 is an object display example when objects are arranged based on a remote control layout specific to each page. With reference to FIG 8, the object display example when objects are arranged based on a remote control layout specific to each page will be described.

In FIG. 8, there is shown a screen 131 which is generated by the remote commander 100A based on the CustomPanel shown in FIG. 7 and an example of objects displayed on the display section 130.

### [1-9. Processing executed by information processing system]

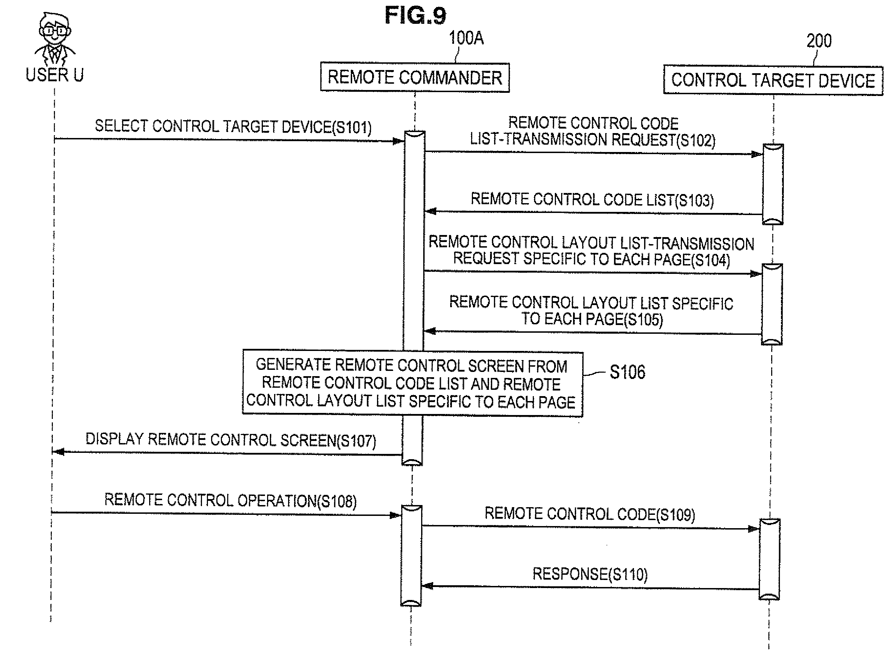

FIG 9 is a flowchart showing a flow of processing executed by the information processing system according to the first embodiment of the present invention. With reference to FIG 9, the processing executed by the information processing system according to the embodiment will be described.

As shown in FIG. 9, the user U selects a control target device 200 (step S101), and the remote commander 100A transmits a remote control code list-transmission request to the selected control target device 200 (step S102). The control target device 200 transmits, as a response to the remote control code list-transmission request, a remote control code list to the remote commander 100A(step S103).

Subsequently, the remote commander 100A transmits a remote control layout list-transmission request specific to each page to the selected control target device 200 (step S104). The control target device 200 transmits, as a response to the remote control layout list-transmission request specific to each page, a remote control layout list specific to each page to the remote commander 100A (step S105).

Note that, here, the remote commander 100A separately transmits the remote control code list-transmission request and the remote control layout list-transmission request specific to each page. However, as described above, the remote commander 100A may also transmit, to the control target device 200, a remote control information-transmission request which holds together the remote control code list-transmission request and the remote control layout list-transmission request specific to each page.

The remote commander 100A generates a remote control screen from the remote control code list and the remote control layout list specific to each page which are received from the control target device 200 (step S106), and displays the generated remote control screen (step S107). The user U performs remote control operation while viewing the displayed remote control screen (step S108), and selects a command. The remote commander 100A transmits a remote control code for identifying the command selected by the user U to the control target device 200 (steps 109).

The control target device 200 executes the processing in accordance with the command identified by the remote control code received from the remote commander 100A. The control target device 200 may transmit a response with respect to the remote control code to the remote commander 100A (step S110).

### <2. Second embodiment>

Next, a second embodiment of the present invention will be described. In the second embodiment of the present invention, an information processing apparatus acquires model information for identifying remote control information from a control target device, and acquires the remote control information from a server based on the acquired model information.

### [2-1. Configuration of information processing system]

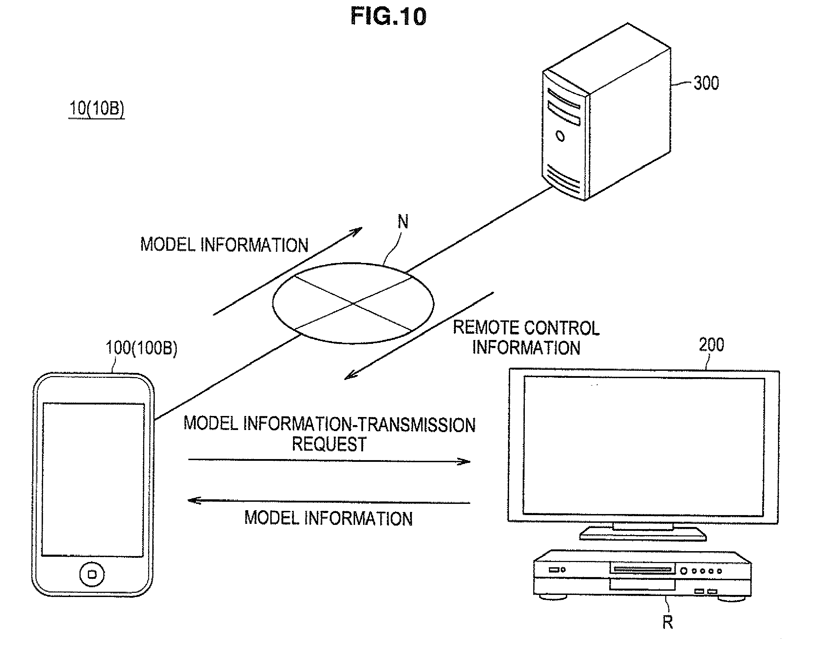

FIG. 10 is a diagram showing a configuration of an information processing system according to the second embodiment of the present invention. With reference to FIG 10, the configuration of the information processing system according to the embodiment will be described.

As shown in FIG 10, an information processing system 10B according to the second embodiment of the present invention differs from the information processing system 10A according to the first embodiment in that the information processing system 10B includes a server 300. The server 300 is capable of communicating with a remote commander 100B, and the server 300 and the remote commander 100B are capable of communicating with each other via a network N, for example.

In the second embodiment of the present invention, the remote commander 100B transmits a model information-transmission request to a control target device 200, and receives model information as a response to the model information-transmission request. As described above, the model information is information for identifying remote control information. Subsequently, the remote commander 100B transmits the model information acquired from the control target device 200 to the server 300, and receives, as a response thereto from the server 300, the remote control information identified by the model information.

Therefore, also in the second embodiment of the present invention, the remote commander 100 can acquire the remote control information in the same manner as in the first embodiment of the present invention. However, the control target device 200 according to the second embodiment of the present invention holds the model information for identifying the remote control information, and may transmit the model information to the remote commander 100B. Accordingly, the function similar to that of the information processing system 10A can be easily realized even in the case where it is difficult to add, to an existing control target device 200, a function of transmitting the remote control information to the remote commander 100B.

### [2-2. Functional configuration of remote commander]

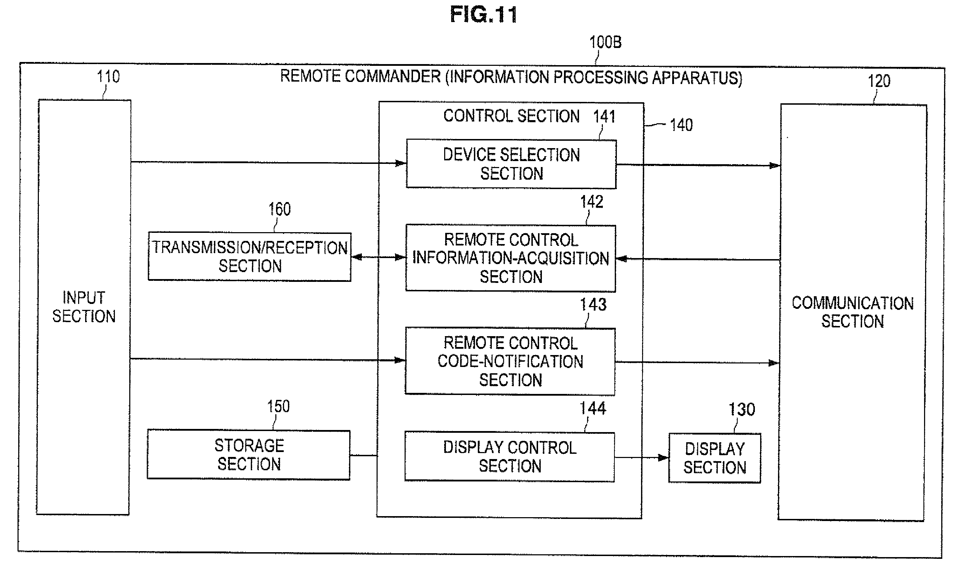

FIG. 11 is a diagram showing a functional configuration of a remote commander according to the second embodiment of the present invention. With reference to FIG 11, the functional configuration of the remote commander according to the embodiment will be described.

As shown in FIG 11, the remote commander 100B according to the second embodiment of the present invention further includes a transmission/reception section 160 which communicates with the server 300. The transmission/reception section 160 is capable of transmitting/receiving a signal to/from the server 300 by wire or radio. Further, as described above, the transmission/reception section 160 may communicate with the server 300 via the network N.

The remote control information-acquisition section 142 has a function of acquiring model information for identifying layout information which has one or multiple pieces of object information. As described above, the object information is formed by associating the following with each other: command identification information for identifying a command with respect to the control target device 200; object identification information for identifying an object; and coordinate information indicating a position of the object on a screen. Further, the remote control information-acquisition section 142 has functions of transmitting the acquired model information to the server 300 via the transmission/reception section 160 and acquiring the layout information identified by the model information from the server 300 via the transmission/reception section 160.

There are considered various techniques of acquiring the model information, and the techniques are not particularly limited. For example, the remote control information-acquisition section 142 can acquire the model information from the control target device 200 via the communication section 120. In this case, the storage section 250 of the control target device 200 stores the model information, and the remote control information-notification section 241 notifies the remote commander 100B of the model information stored in the storage section 250 via the communication section 220. Further, the remote control information-acquisition section 142 may also acquire the model information from operation information, the input of which is accepted by the input section 110.

### [2-3. Functional configuration of server]

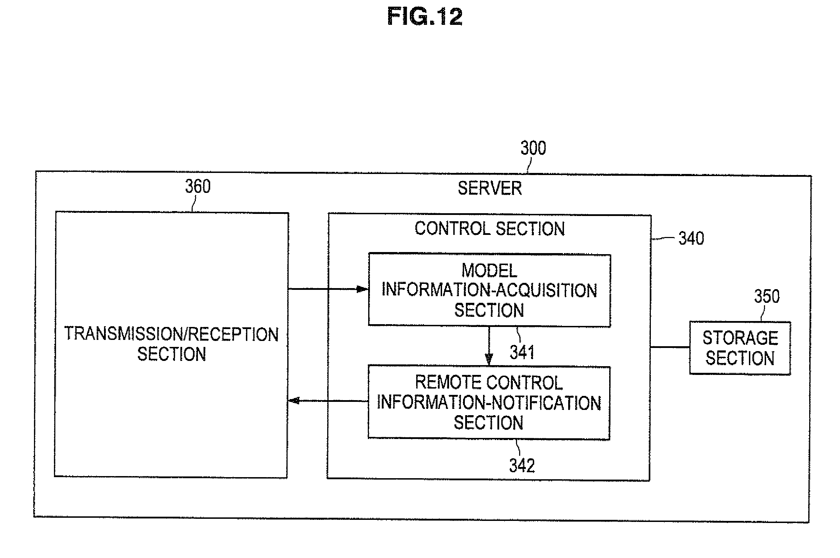

FIG 12 is a diagram showing a functional configuration of a server according to the second embodiment of the present invention. With reference to FIG 12, the functional configuration of the server according to the embodiment will be described.

As shown in FIG 12, the server 300 includes a control section 340, a storage section 350, and a transmission/reception section 360.

The transmission/reception section 360 is capable of transmitting/receiving a signal to/from the remote commander 100B by wire or radio. Further, as described above, the transmission/reception section 360 may communicate with the remote commander 100B via the network N.

The control section 340 has a function of controlling operation of the remote commander 100B. The control section 340 includes, for example, a CPU and a RAM. The function of the control section 340 is realized by developing a program stored in the storage section 350 in the RAM by the CPU, and executing the program developed in the RAM by the CPU. The control section 340 includes a model information-acquisition section 341 and a remote control information-notification section 342.

The model information-acquisition section 341 has a function of acquiring the model information from the remote commander 140B via the transmission/reception section 360. The model information-acquisition section 341 functions as an example of an acquisition section.

The remote control information-notification section 342 has a function of notifying, via the transmission/reception section 360, the remote commander 104B of the layout information which is identified by the model information acquired by the model information-acquisition section 341. The remote control information-notification section 342 functions as an example of a communication section.

The storage section 350 has a function of storing data and programs used by the control section 340. The storage section 350 includes an HDD and a semiconductor memory, for example. In addition thereto, the storage section 350 has a function of storing layout information. The layout information is, as described above, information having one or multiple pieces of object information, the object information being formed by associating the following with each other: command identification information for identifying a command with respect to the control target device 200; object identification information for identifying an object; and coordinate information indicating a position of the object on the display section 130 of the remote commander 100B.

### [2-4. Processing executed by information processing system]

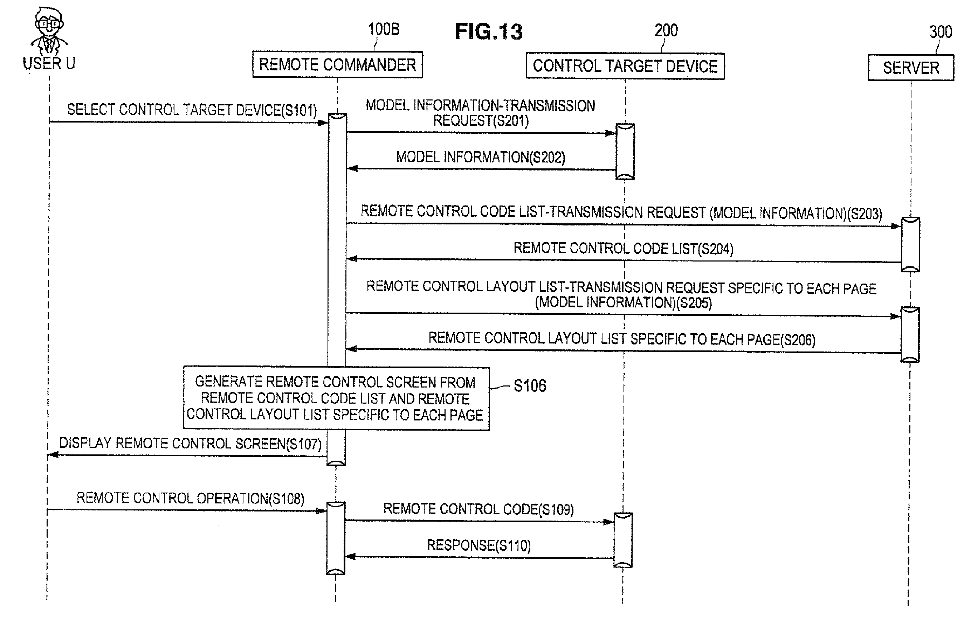

FIG. 13 is a flowchart showing a flow of processing executed by the information processing system according to the second embodiment of the present invention. With reference to FIG. 13, the processing executed by the information processing system according to the embodiment will be described.

As shown in FIG. 13, the user U selects a control target device 200 (step S101), and the remote commander 100B transmits a model information-transmission request to the selected control target device 200 (step S201). The control target device 200 transmits, as a response to the model information-transmission request, model information to the remote commander 100B (step S202).

Subsequently, the remote commander 100B transmits a remote control code list-transmission request including the received model information to the server 300 (step S203). The server 300 transmits, as a response to the remote control code list-transmission request, a remote control code list to the remote commander 100B (step S204).

Subsequently, the remote commander 100B transmits a remote control layout list-transmission request specific to each page including the received model information to the server 300 (step S205), The server 300 transmits, as a response to the remote control layout list-transmission request specific to each page, a remote control layout list specific to each page to the remote commander 100B (step S206).

Note that, here, the remote commander 100B separately transmits the remote control code list-transmission request and the remote control layout list-transmission request specific to each page. However, as described above, the remote commander 100B may also transmit, to the control target device 200, a remote control information-transmission request which holds together the remote control code list-transmission request and the remote control layout list-transmission request specific to each page.

Steps S106 to S110 that follow are executed in the same manner as steps S106 to S110 executed by the information processing system 10A according to the first embodiment of the present invention, respectively.

### <3. Modified example>

It should be understood by those skilled in the art that various modifications, combinations, sub-combinations and alterations may occur depending on design requirements and other factors insofar as they are within the scope of the appended claims or the equivalents thereof.

For example, it is not necessary that the information processing system according to the embodiments of the present invention execute the processing in the order shown in the flowcharts, and the order of the processing may be appropriately changed. Further, the information processing system according to the embodiments of the present invention may execute the processing shown in the flowcharts once, or may execute the processing multiple times repeatedly.

### <4. Summary >

According to the present embodiments, it becomes possible for the remote commander 100 as an example of the information processing apparatus to manage the command identification information to be selected by the user and the screen layout viewed by the user for selecting the command identification information with respect to each control target device. Thus, the remote commander 100 can generate and display different remote control screens depending on respective control target devices 200.

Further, the remote commander 100 is also capable of acquiring a layout with respect to each page even from the same control target device 200. Accordingly, it becomes possible for the remote commander 100 to display a remote control screen with respect to each page and to switch the pages from one to another by user operation. Consequently, the situation where there is not enough room in one page for displaying objects such as buttons can be avoided. Further, it becomes possible to design the remote commander 100 in such a manner that a page which is assumed to be highly frequently used by the user is displayed by lesser number of switching operations.

Further, according to the second embodiment of the present invention, the control target device 200 holds model information for identifying remote control information, and may transmit the model information to the remote commander 100B. Accordingly, the function similar to that of the information processing system 10A can be easily realized even in the case where it is difficult to add, to an existing control target device 200, a function of transmitting the remote control information to the remote commander 100B.

The present application contains subject matter related to that disclosed in Japanese Priority Patent Application JP 2009-298147 filed in the Japan Patent Office on December 28, 2009.

In so far as embodiments of the invention are implemented, at least in part, by means of software-controlled data processing apparatus, it will be appreciated that such software, and/or a providing medium such as a storage or network transmission medium by which such software is provided, are considered as aspects of the present invention.

## Claims

1. An information processing apparatus comprising:
an input section which accepts input of operation information from a user;
a communication section which communicates with a control target device via a radio signal;
a display section which displays a screen;
an acquisition section which acquires layout information having one or a plurality of pieces of object information from the control target device via the communication section, the object information being formed by associating command identification information for identifying a command with respect to the control target device, object identification information for identifying an object, and coordinate information indicating a position of the object on the screen with each other;
a display control section which causes the object to be displayed at the position on the screen indicated by the coordinate information, the object being identified by the object identification information with respect to each of the pieces of object information that the layout information acquired by the acquisition section has; and
a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section.

2. The information processing apparatus according to claim 1,
wherein, when there are a plurality of pieces of the layout information, the acquisition section acquires the pieces of layout information specific to screens, respectively, from the control target device via the communication section, and
wherein the display control section selects one piece of layout information from among the pieces of layout information specific to the screens, respectively, based on the operation information, the input of which is accepted by the input section, and causes the object to be displayed at the position on the screen indicated by the coordinate information, the object being identified by the object identification information with respect to each of the pieces of object information that the selected layout information has.

3. The information processing apparatus according to claim 1,
wherein, when there are a plurality of the control target devices, the acquisition section acquires the pieces of layout information specific to the control target devices, respectively, from the control target devices via the communication section, and
wherein the display control section selects one piece of layout information from among the pieces of layout information specific to the control target devices, respectively, based on the operation information, the input of which is accepted by the input section, and causes the object to be displayed at the position on the screen indicated by the coordinate information, the object being identified by the object identification information with respect to each of the pieces of object information that the selected layout information has.

4. The information processing apparatus according to claim 1,
wherein the acquisition section further acquires a communication mode, which is further associated with the command identification information, from the control target device via the communication section, and
wherein the notification section notifies, via the communication section, the control target device of the command identification information by the communication mode which is associated with the object identification information for identifying the selected object and which is acquired by the acquisition section.

5. An information processing apparatus comprising:
an input section which accepts input of operation information from a user;
a communication section which communicates with a control target device via a radio signal;
a transmission/reception section which communicates with a server;
a display section which displays a screen;
an acquisition section which acquires model information for identifying layout information which has one or a plurality of object information, the object information being formed by associating command identification information for identifying a command with respect to the control target device, object identification information for identifying an object, and coordinate information indicating a position of the object on the screen with each other, and which transmits the acquired model information to the server via the transmission/reception section and acquires the layout information identified by the model information from the server via the transmission/reception section;
a display control section which causes the object to be displayed at the position on the screen indicated by the coordinate information, the object being identified by the object identification information with respect to each of the pieces of object information that the layout information acquired by the acquisition section has; and
a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section.

6. The information processing apparatus according to claim 5,
wherein the acquisition section acquires the model information from the control target device via the communication section.

7. The information processing apparatus according to claim 5,
wherein the acquisition section acquires the model information from the operation information, the input of which is accepted by the input section.

8. An information processing method performed by an information processing apparatus including an input section which accepts input of operation information from a user, a communication section which communicates with a control target device via a radio signal, a display section which displays a screen, an acquisition section, a display control section, and a notification section, the information processing method comprising the steps of:
acquiring, by the acquisition section, layout information having one or a plurality of pieces of object information from the control target device via the communication section, the object information being formed by associating command identification information for identifying a command with respect to the control target device, object identification information for identifying an object, and coordinate information indicating a position of the object on the screen with each other;
causing, by the display control section, the object to be displayed at the position on the screen indicated by the coordinate information, the object being identified by the object identification information with respect to each of the pieces of object information that the layout information acquired by the acquisition section has; and
selecting, by the notification section, when there are a plurality of the objects, any one of the objects based on the operation information, the input of which is accepted by the input section, and notifying, by the notification section, via the communication section, the control target device of the command identification information which is associated with the object identification information for identifying the selected object and which is acquired by the acquisition section.

9. A program for causing a computer to function as an information processing apparatus which includes
an input section which accepts input of operation information from a user,
a communication section which communicates with a control target device via a radio signal,
a display section which displays a screen,
an acquisition section which acquires layout information having one or a plurality of pieces of object information from the control target device via the communication section, the object information being formed by associating command identification information for identifying a command with respect to the control target device, object identification information for identifying an object, and coordinate information indicating a position of the object on the screen with each other,
a display control section which causes the object to be displayed at the position on the screen indicated by the coordinate information, the object being identified by the object identification information with respect to each of the pieces of object information that the layout information acquired by the acquisition section has, and
a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section.

10. A control target device comprising:
a communication section which communicates with an information processing apparatus via a radio signal;
a storage section which stores layout information having one or a plurality of pieces of object information, the object information being formed by associating command identification information for identifying a command with respect to the control target device, object identification information for identifying an object, and coordinate information indicating a position of the object on the display section of the information processing apparatus with each other;
a notification section which notifies the information processing apparatus of the layout information stored in the storage section via the communication section; and
a processing execution section which acquires the command identification information from the information processing apparatus via the communication section, and which executes the command identified by the acquired command identification information.

11. An information processing system comprising:
an information processing apparatus; and
a control target device,
wherein the information processing apparatus includes
an input section which accepts input of operation information from a user,
a communication section which communicates with the control target device via a radio signal,
a display section which displays a screen,
an acquisition section which acquires layout information having one or a plurality of pieces of object information from the control target device via the communication section, the object information being formed by associating command identification information for identifying a command with respect to the control target device, object identification information for identifying an object, and coordinate information indicating a position of the object on the screen with each other,
a display control section which causes the object to be displayed at the position on the screen indicated by the coordinate information, the object being identified by the object identification information with respect to each of the pieces of object information that the layout information acquired by the acquisition section has, and
a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section, and
wherein the control target device includes
a communication section which communicates with the information processing apparatus via the radio signal,
a storage section which stores the layout information,
a notification section which notifies the information processing apparatus of the layout information stored in the storage section via the communication section, and
a processing execution section which acquires the command identification information from the information processing apparatus via the communication section, and which executes the command identified by the acquired command identification information.

12. An information processing system comprising:
an information processing apparatus;
a control target device; and
a server,
wherein the information processing apparatus includes
an input section which accepts input of operation information from a user,
a communication section which communicates with the control target device via a radio signal,
a transmission/reception section which communicates with the server,
a display section which displays a screen,
an acquisition section which acquires model information for identifying layout information which has one or a plurality of object information, the object information being formed by associating command identification information for identifying a command with respect to the control target device, object identification information for identifying an object, and coordinate information indicating a position of the object on the screen with each other, and which transmits the acquired model information to the server via the transmission/reception section and acquires the layout information identified by the model information from the server via the transmission/reception section,
a display control section which causes the object to be displayed at the position on the screen indicated by the coordinate information, the object being identified by the object identification information with respect to each of the pieces of object information that the layout information acquired by the acquisition section has, and
a notification section which selects, when there are a plurality of the objects, any one of the objects based on the operation information, the input of which is accepted by the input section, and which notifies, via the communication section, the control target device of the command identification information which is associated with the object identification information for identifying the selected object and which is acquired by the acquisition section,
wherein the control target device includes
a communication section which communicates with the information processing apparatus via the radio signal,
a storage section which stores the model information,
a notification section which notifies the information processing apparatus of the model information stored in the storage section via the communication section, and
a processing execution section which acquires the command identification information from the information processing apparatus via the communication section, and which executes the command identified by the acquired command identification information, and
wherein the server includes
a transmission/reception section which communicates with the information processing apparatus,
a storage section which stores the layout information,
an acquisition section which acquires the model information from the information processing apparatus via the transmission/reception section, and
a notification section which notifies, via the transmission/reception section, the information processing apparatus of the layout information which is identified by the model information acquired by the acquisition section.
